(19) Europäisches Patentamt
European Patent Office
Office européen des brevets

(11) **EP 1 412 699 B1**

(12) **EUROPÄISCHE PATENTSCHRIFT**

(45) Veröffentlichungstag und Bekanntmachung des Hinweises auf die Patenterteilung:
**05.09.2007 Patentblatt 2007/36**

(21) Anmeldenummer: **02747419.6**

(22) Anmeldetag: **20.06.2002**

(51) Int Cl.:
**G01C 19/72** *(2006.01)*

(86) Internationale Anmeldenummer:
**PCT/EP2002/006860**

(87) Internationale Veröffentlichungsnummer:
**WO 2003/001153 (03.01.2003 Gazette 2003/01)**

(54) **VERFAHREN ZUR VERMEIDUNG VON BIAS-FEHLERN AUFGRUND SYNCHRONER EINSTREUUNG BEI FASEROPTISCHEN GYROSKOPEN**

METHOD FOR PREVENTING BIAS-ERRORS AS A RESULT OF SYNCHRONOUS INTERFERENCE IN FIBRE-OPTIC GYROSCOPES

PROCEDE D'EVITEMENT DE DEFAUTS DE POLARISATION DUS A DES INTERFERENCES SYNCHRONES DANS DES GYROSCOPES A FIBRES OPTIQUES

(84) Benannte Vertragsstaaten:
**DE FR GB**

(30) Priorität: **22.06.2001 DE 10130159**

(43) Veröffentlichungstag der Anmeldung:
**28.04.2004 Patentblatt 2004/18**

(73) Patentinhaber: **LITEF GmbH**
**79115 Freiburg (DE)**

(72) Erfinder: **SPAHLINGER, Günter**
**70188 Stuttgart (DE)**

(74) Vertreter: **Müller, Frithjof E.**
**Müller Hoffmann & Partner**
**Patentanwälte**
**Innere Wiener Strasse 17**
**81667 München (DE)**

(56) Entgegenhaltungen:
**DE-C- 19 748 909          US-A- 4 759 629**

EP 1 412 699 B1

**Beschreibung**

Die Erfindung betrifft ein Verfahren zur Vermeidung von Bias-Fehlern aufgrund synchroner Einstreuung bei faseroptischen Gyroskopen (FOGs), im Folgenden und in Anlehnung an die früheren mechanischen Kreisel auch als faseroptische Kreisel bezeichnet.

Faseroptische Kreisel sind gegenüber elektrischen Einkopplungen in den optischen Phasenmodulator empfindlich, sofern der Kreisel nicht exakt mit einer Arbeitsfrequenz betrieben wird, die dem Reziprokwert der Laufzeit des Lichts durch die Faserspule (Messspule) entspricht, wobei die Einkopplung eine periodische Funktion ist, deren Periode gleich dem Reziprokwert der Arbeitsfrequenz ist. Solche Störsignale - auch als synchrone Einstreuungen bezeichnet - treten aufgrund der Beschaffenheit der elektronischen Regel- und Modulationseinrichtungen im elektronischen Teil des Messsystems in der Regel in großer Zahl auf. Eine systemtheoretische Analyse dieses Effekts ist weiter unten ausführlich beschrieben. Eine Abhilfemaßnahme gegen die hierbei auftretenden Bias- oder Nullpunktfehler besteht darin, die Arbeitsfrequenz auf den genannten Idealwert, d. h. den Reziprokwert der Lichtdurchlaufzeit durch die Faserspule, abzustimmen. Da diese Idealfrequenz kein konstanter Wert ist, sondern z. B. von der Temperatur abhängt, sollte die Arbeitsfrequenz durch einen Regler ständig dem Idealwert nachgeführt werden.

Die oben angeführten Zusammenhänge sind seit längerem bekannt, und z. B. in US 4 759 629 beschrieben. Dort ist auch eine Abhilfemaßnahme durch eine VCO-Regelung angegeben. Diese bekannte Maßnahme hat jedoch zwei deutliche Nachteile:

1. Das bekannte Frequenz-Nachführverfahren lässt sich nicht auf Gyroskope anwenden, die nach einem stochastischen oder Random-Phase-Modulationsverfahren arbeiten, wie es z. B. in EP 0 441 998 B1 bzw. in EP 0 551 537 B1 beschrieben ist.

2. Damit die Frequenzregelung im gewünschten Sinn arbeiten kann, muss dem Regler eine Information über die momentane Abweichung der Arbeitsfrequenz vom Idealwert zur Verfügung gestellt werden. Nach der Lehre des genannten US-Patents wird der Betrag dieser Abweichung durch die Fläche von Impulsen repräsentiert. Das Vorzeichen der Abweichung wird dabei durch die zeitliche Lage eines jeweiligen Impulses gegenüber einem Referenzzeitpunkt bestimmt, wobei im Falle eines positiven Vorzeichens das Ende des Impulses mit dem Referenzzeitpunkt übereinstimmt und bei negativem Vorzeichen mit seinem Anfang. Bei sehr geringen Frequenzabweichungen (im ppm-Bereich) sind diese Impulse nur wenige ps (pico-Sekunden) lang. Da sich nun das Vorzeichen durch die Ausrichtung dieser schmalen Impulse am Referenzzeitpunkt ergibt, müsste eine Detektorschaltung die zeitliche Impulslage auf wenige ps genau ermitteln können. Das jedoch ist technisch nicht möglich, so dass das angegebene Verfahren im Bereich geringer Frequenzabweichungen, in dem das System ja vorzugsweise arbeiten sollte, ein falsches Vorzeichen liefern kann und daher im Bereich des Nullpunkts nur mit relativ großen Fehlern arbeitet. Wichtiger noch ist, dass dabei zur Frequenzregelung kein linear arbeitendes Korrelationsverfahren angewendet werden kann, mit dem sich das zur Regelung verwendete Signal auch aus einem verrauschten Signal des Fotodetektors herausfiltern ließe.

Der Erfindung liegt die Aufgabe zugrunde, ein besseres Verfahren und eine dafür geeignete Schaltungsanordnung zur Vermeidung von Bias-Fehlern bei faseroptischen Gyroskopen anzugeben, die ihre Ursache in den genannten synchronen Störsignaleinstreuungen haben.

Das erfindungsgemäße Verfahren zur Vermeidung von Bias-Fehlern aufgrund synchroner Einstreuung bei faseroptischen Gyroskopen (FOGs) mit geschlossener Regelschleife ist erfindungsgemäß dadurch gekennzeichnet, dass dem demodulierten Ausgangssignal des FOG-Detektors eine zum Reziprokwert der Arbeitsfrequenz des Gyroskops periodische Zusatzmodulation aufgeprägt wird, im demodulierten Detektorsignal die vorhandenen Reste der Zusatzmodulation detektiert und mit dem detektierten Signal der restlichen Zusatzmodulation ein Hilfsregelkreis angesteuert wird, der die Arbeitsfrequenz so nachregelt, dass die Zusatzmodulation innerhalb technisch vorgebbarer oder vorgegebener Grenzen zu Null wird. Vorzugsweise wird das demodulierte Detektorsignal mit dem Signal der Zusatzmodulation korreliert und mit dem korrelierten Signal wird der Hilfsregelkreis angesteuert, um die Arbeitsfrequenz so nachzuregeln, dass die Korrelation innerhalb technisch möglicher Grenzen zu Null wird.

Prinzipiell kommen im Rahmen des Erfindungsgedankens alle Detektions-Verfahren in Frage, die sich zum Nachweis von "Resten" der Zusatzmodulation eignen, so z. B. das Suchen bestimmter Merkmale der Zusatzmodulation, wie das Aufsuchen einer "Sprungstelle" mit Abtasten davor und danach und Bilden der Differenz beider Abtastwerte.

Das Verfahren nach der Erfindung unterscheidet sich damit grundsätzlich von dem aus DE 197 48 909 C1 bekannten Dekorrelationsverfahren, durch das Einstreuungen in den Detektorpfad des FOGs minimiert werden.

Die Erfindung und die zu deren Verständnis hilfreiche systemtheoretische Analyse wird nachfolgend anhand eines Ausführungsbeispiels unter Bezug auf die Zeichnungen näher erläutert. Es zeigen:

**Fig. 1** ein schematisiertes Blockschaltbild der Architektur eines FOGs mit Detaildarstellung der erfindungsgemäßen Arbeitsfrequenzregelung;

**Fig. 2** ein prinzipielles Schaltungsmodell zur Erläuterung, was unter "synchroner Einstreuung" zu verstehen ist;

**Fig. 3** eine erste Modifikation der Modelldarstellung der Fig. 2 für die synchrone Einstreuung;

**Fig. 4** eine zweite Modifikation des Modells für eine synchrone Einstreuung;

**Fig. 5** eine dritte Modifikation des Modells für eine synchrone Einstreuung;

**Fig. 6** eine aus der dritten Modifikation entwickelte vierte Modifikation eines Modells für eine synchrone Einstreuung;

**Fig. 7** ein zeitkontinuierliches Modell der Zustandsvariablendarstellung eines Austaster-Filters;

**Fig. 8** ein Beispiel für einen treppenförmigen Verlauf einer Funktion $\tilde{u}(t)$ und deren Abtastwerte $u(n)$

**Fig. 9** ein zeitdiskretes Ersatzmodell für das allgemeine zeitkontinuierliche Modell der Fig. 7 bei einer Betriebsart unter Berücksichtigung der treppenförmigen Funktion der Fig. 8;

**Fig. 10** ein aus dem Modell der Fig. 7 entwickeltes kontinuierliches Modell bei Annahme eines differenzierenden Eingangs;

**Fig. 11** eine erste Modifikation des kontinuierlichen Modells mit differenzierendem Eingang nach Fig. 10;

**Fig. 12** eine zweite Modifikation des kontinuierlichen Modells nach Fig. 10 mit differenzierendem Eingang;

**Fig. 13** eine diskrete Nachbildung (Ersatzbild) des Modells gemäß zweiter Modifikation nach Fig. 12 bei differenzierendem Eingang;

**Fig. 14** ein komplettes Modell zusammengefügt aus den Darstellungen der Fig. 6 und 13 mit Berücksichtigung, dass die Eingangs- und Ausgangssignale des Austaster-Filters Skalare sind;

**Fig. 15** das Prinzipschaltbild eines Tiefpassfilters;

**Fig. 16** das Prinzipschaltbild eines Tiefpassfilters mit Entladefunktion; und

**Fig. 17** ein komplettes zeitdiskretes systemtheoretisches Modell mit Austaster-Filter erster Ordnung.

Nachfolgend wird zunächst eine Systemanalyse der Phasenmodulation eines Sagnac-Interferometers unter Berücksichtigung synchroner Störsignaleinstreuungen gegeben. Anschließend wird die Demodulierung eines Austaster-Filters erläutert in Verbindung mit der Grundidee der Erfindung, ein im Abtasttakt periodisches Signal $\varphi_E$ in Form einer Zusatzmodulation zum Modulationssignal am Phasenmodulator, vorzugsweise innerhalb eines multifunktionellen integrierten optischen Chips (MIOC), zu addieren.

**1. Die Analyse der Phasenmodulation bei einem faseroptischen Gyroskop**

Zunächst wird eine Analyse des "physikalischen Kreiselpfads" im nicht abgestimmten Betrieb bei synchroner Einstreuung vorgenommen. Es bedeuten:

| | |
|---|---|
| $\varphi_m$ | Ungestörtes MIOC-Ansteuersignal |
| $\varphi_E$: | Einstreuung in MIOC |
| $\varphi_S$: | Sagnac-Phase |
| $T_0$: | Laufzeit des Lichts |
| $T$: | Taktzeit der MIOC-Modulation, Periode der Einstreuung |
| $\Delta T = T_0 - T$: | Taktzeitabweichung |
| $\varphi$: | Interferometrische Gesamtphase |
| $\alpha$: | Ungestörte interferometrische Phase |

β:    Störung, interferometrisch.

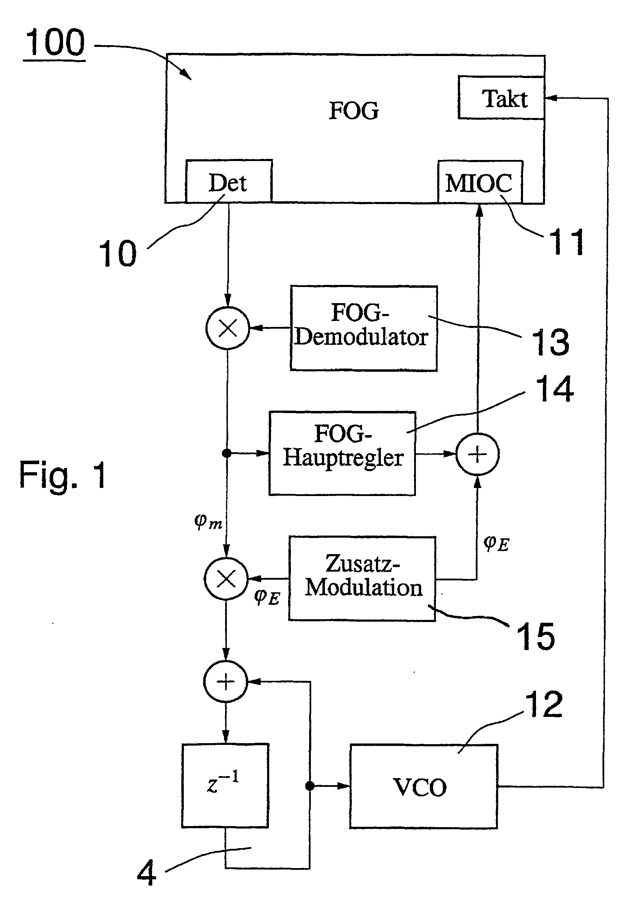

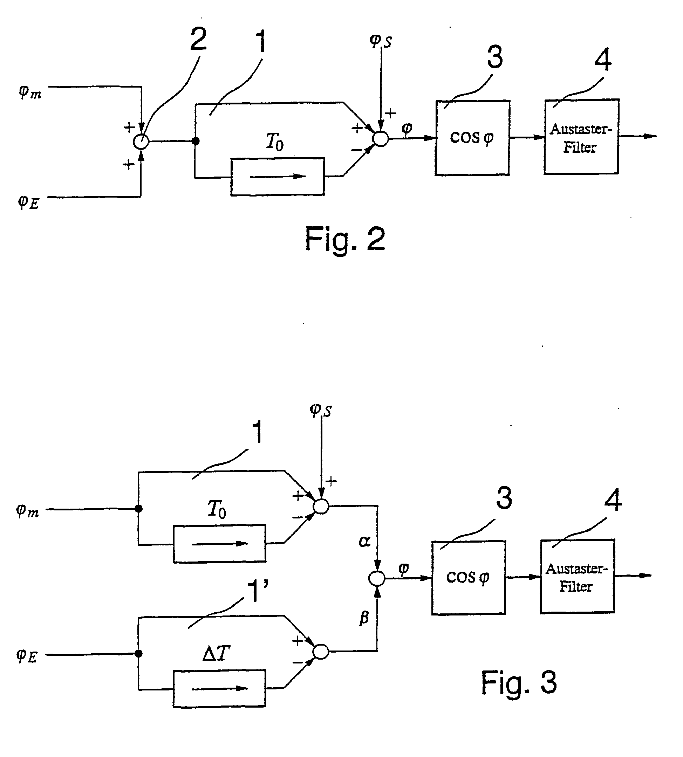

Die Funktion des Kreisels im nicht abgestimmten Betrieb bei Vorhandensein einer synchronen Einstreuung ergibt sich aus Fig. 2, wobei die Messspule des Interferometers schematisch dargestellt und mit Bezugshinweis 1 gekennzeichnet ist. Zum ungestörten Ansteuersignal am symbolisch durch einen Kreis 2 angedeuteten Phasenmodulator, dem MIOC-Ansteuersignal $\varphi_m$ wird eine Störung $\varphi_E$ addiert; die Summe beider Signale ist das effektive Modulationssignal am MIOC. Interferometrisch wirksam wird dieses Signal, indem die Differenz aus unverzögertem und um die Zeit To, d. h. der Laufzeit des Lichts durch die Messspule des Interferometers, verzögertem Signal gebildet wird. Wird hierzu noch die Sagnac-Phase $\varphi_S$ addiert, so entsteht die interferometrische Gesamtphase $\varphi$. Der nachgeschaltete Block 3 mit der Transferfunktion $\cos\varphi$ repräsentiert die Funktion des Interferometers, wobei das Ausgangssignal die normierte, von Gleichspannungskomponenten befreite Lichtleistung am (in Fig. 2 nicht dargestellten) Fotodetektor 10 (Fig. 1) (bzw. dessen Ausgangssignal) ist. Anschließend folgt ein Block 4, der die Funktion eines Filters und Austasters erfüllt - ein kontinuierliches lineares System mit zeitabhängigen Parametern - was weiter unten näher erläutert wird. Das ungestörte MIOC-Signal $\varphi_m(t)$ ist (näherungsweise) eine Treppenfunktion mit einer Stufenbreite von T, der Taktzeit der Modulation am MIOC. Für die Zeitdauer einer Stufe ist das MIOC-Signal konstant und kann daher für jede Stufe durch einen diskreten Wert beschrieben werden. Die Abfolge dieser diskreten Werte entspricht einem diskreten Signal mit der Abtastfrequenz $f_A = 1/T$. Das Störsignal oder die Einstreuung $\varphi_E$ ist, wie erwähnt, eine in T periodische Funktion; dasselbe gilt für die Parameter des Austaster-Filters. Wegen der Periodizität von $\varphi_E$:

$$\varphi_E(t + T) = \varphi_E(t) \tag{1}$$

gilt

$$\varphi_E(t + T_0) = \varphi_E(t - \Delta T) \tag{2}$$

Fächert man nun die Einkoppelpfade in den Summationsknoten des Interferometers in Fig. 2 in einen ungestörten Teil einschließlich Sagnac-Phase und einen Teil für die Störung $\varphi_E(t)$ unter Ausnutzung der Linearität auf und berücksichtigt für jenen zweiten Teil die Beziehung der Gleichung (2), so lässt sich das prinzipielle Modell nach Fig. 2 durch das modifizierte Blockdiagramm gemäß Fig. 3 wiedergegeben. Hieraus wird insbesondere ersichtlich, dass für $\Delta T = 0$, also im abgestimmten Fall, die Störung $\varphi_E(t)$ völlig ohne Wirkung bleibt.
Als nächstes wird nun angenommen, dass die Störung klein sei:

$$\varphi_E(t) \ll 1 \tag{3}$$

Damit ist auch

$$\beta(t) = \varphi_E(t) - \varphi_E(t - \Delta T) \ll 1 \tag{4}$$

Am Eingang des Blocks 3 mit der Interferometertransferfunktion $\cos\varphi$ liegt die Summe von zwei Winkeln, nämlich $\varphi = \alpha + \beta$, an. Wegen

$$\cos(\alpha+\beta)=\cos\alpha\cos\beta-\sin\alpha\sin\beta \tag{5}$$

ist mit $\beta \ll 1$:

$$\cos\varphi(t) \approx \cos\alpha(t) + \beta(t) \cdot \sin\alpha(t) \qquad (6)$$

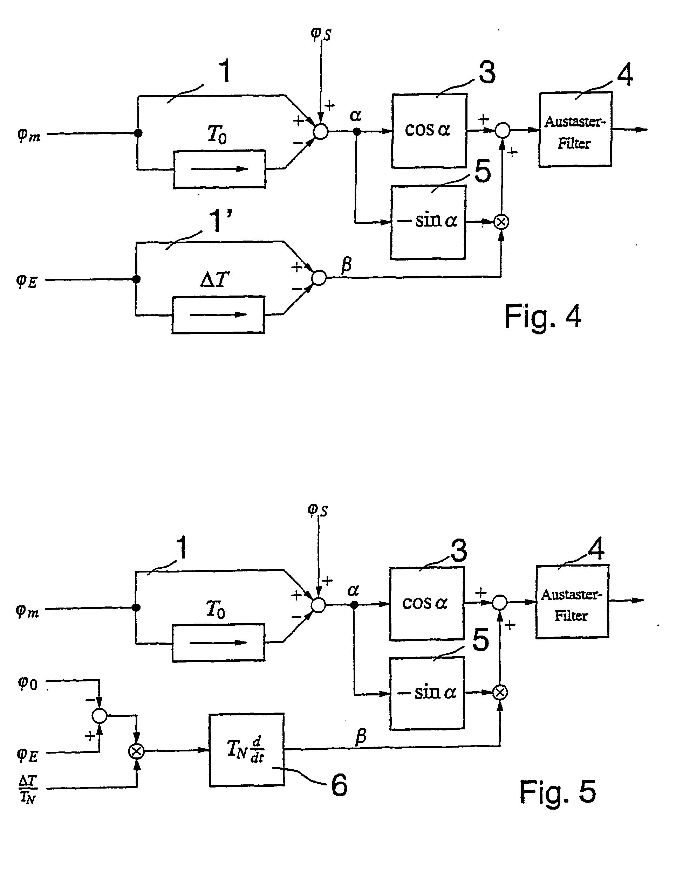

Hieraus folgt eine zweite Modifikation des prinzipiellen Modells aus Fig. 2 gemäß dem Blockdiagramm nach Fig. 4, wobei die Transferfunktion $(-\sin\alpha)$ durch den Block 5 veranschaulicht ist.

Eine weitere zulässige Vereinfachung entsteht dadurch, dass wegen

$$\frac{d}{dt}\varphi_E(t) = \lim_{\Delta T \to 0} \frac{\varphi_E(t) - \varphi_E(t - \Delta T)}{\Delta T} \qquad (7)$$

für sehr kleine Taktabweichung ($\Delta T \to 0$) gilt:

$$\varphi_E(t) - \varphi_E(t - \Delta T) \approx \Delta T \frac{d}{dt}\varphi_E(t) \qquad (8)$$

Damit ergibt sich gemäß Fig. 5 die Möglichkeit die Differenzbildung bezogen auf die Störung $\varphi_E$ in der durch Bezugshinweis 1' gekennzeichneten Messspule durch ein Differenzierglied zu ersetzen, wie es sich aus Fig. 5 ersehen läßt. $T_N$ ist hierbei eine frei wählbare Normierungskonstante. Wie aus dem Bild der Fig. 5 hervorgeht, wird von der Störung $\varphi_E$ noch eine vorgebbare Konstante $\varphi_0$ subtrahiert, die jedoch ohne Bedeutung bleibt, da $\Delta T/T_N$ ebenfalls konstant ist. Somit ergibt sich

$$\frac{d}{dt}\Delta T\varphi_0 = 0 \qquad (9)$$

Als Vorbereitung zu einer weiteren Umformung des Blockdiagramms nach Fig. 5 dient die folgende Überlegung: Im normalen Betrieb des FOGs ist die Sagnac-Phase $\varphi_S$ näherungsweise konstant. Das Rückstellsignal $\varphi_m(t)$ am Phasenmodulator innerhalb des MIOCs ist (näherungsweise) eine Treppenfunktion, die bis auf schmale, periodisch wiederkehrende Zeitbereiche, in denen der Übergang zur nächsten Treppenfunktion stattfindet, konstant ist. Die schmalen Bereiche, in denen das Signal nicht konstant ist (Schaltzeitpunkte) bilden eine Menge $\mathcal{Q}$ von Zeitpunkten. Damit ist neben $\varphi_m(t)$ auch $\alpha(t)$ und $-\sin\alpha(t)$ außerhalb der durch $\mathcal{Q}$ definierten Zeitpunkte konstant:

$$\frac{d}{dt}(-\sin\alpha(t)) = 0 \text{ für } t \notin \mathcal{Q} \qquad (10)$$

Andererseits kann man die Störung $\varphi_E$ während der Schaltintervalle $t \in \mathcal{Q}$ als praktisch konstant ansehen. Da die Störung periodisch in T ist, nimmt sie diesen konstanten Wert bei jedem Schaltvorgang an. Setzt man nun die bisher willkürlich zu wählende Größe 0 auf eben diesen Wert, so ergibt sich

$$\varphi_E(t) - \varphi_0 = 0 \text{ für } t \in \mathcal{Q} \qquad (11)$$

Mit den Gleichungen 10 und 11 ist dann

$$(\varphi_E(t) - \varphi_0) \cdot \frac{d}{dt}(-\sin\alpha(t)) = 0 \text{ für alle } t \qquad (12)$$

Aus der Gültigkeit von Gleichung 12 folgt nun

$$-\sin\alpha(t) \cdot \frac{d}{dt}(\varphi_E(t) - \varphi_0)\Delta T = \frac{d}{dt}(-\sin\alpha(t) \cdot (\varphi_E(t) - \varphi_0)\Delta T) \qquad (13)$$

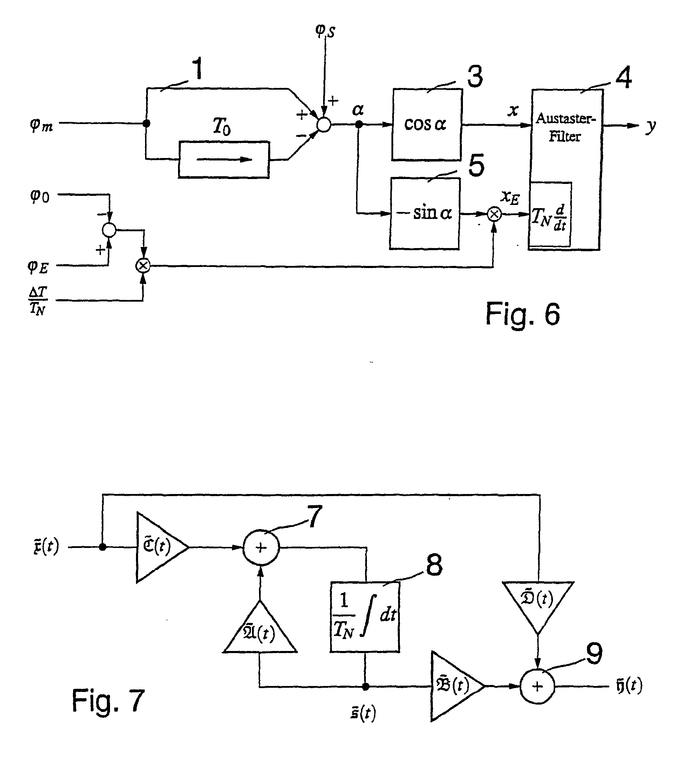

Diese Gleichung sagt aus, dass es bei der vorgeschlagenen Wahl von ($\varphi_0$ erlaubt ist, die Differentiation des Störsignals $\varphi_E(t)$ zu verlegen auf eine Stelle nach der Multiplikation mit -sin$\alpha$. Das Resultat dieser erneuten Modifikation ist in Fig. 6 gezeigt. Hierbei ist das in Fig. 5 mit Bezugshinweis 6 angegebene Differenzierglied dem ausgangsseitigen Austaster-Filter 4 zugeschlagen, der dadurch einen weiteren Eingang erhält.

Wie im Folgenden gezeigt werden wird, ist es möglich, bei der Synthese eines zeitvariablen, zeitdiskreten Tiefpasses, der das angegebene System eines kontinuierlichen Austaster-Filters simuliert, diesen differenzierenden Eingang automatisch zu erhalten.

## 2. Die Modellierung des Austaster-Filters

Um zu einem brauchbaren Modell für das Austaster-Filter zu gelangen, wird zunächst mit dem Modell eines allgemeinen, linearen, zeitkontinuierlichen und zeitvariablen Systems begonnen. Die Zustandsvariablendarstellung eines derartigen Systems ist in Fig. 7 gezeigt.

Zum besseren Verständnis müssen zunächst einige Konventionen zur Bezeichnungsweise erläutert werden:

In Fig. 7 sind kontinuierliche skalare Signale mit Wittenberger Fraktur MT-Kleinbuchstaben bezeichnet, die mit einer Tilde versehen sind; sie sind Funktionen der Zeit, z. B. $\tilde{x}(t)$. Analog hierzu sind zeitabhängige skalare Verstärkungsfaktoren mit Wittenberger Fraktur MT-Großbuchstaben bezeichnet, wie z. B. $\tilde{\mathfrak{A}}(t)$. Diese Funktionen dürfen nicht mit Übertragungsfunktionen verwechselt werden. Im diskreten Fall werden Signale durch Folgen bezeichnet. Das sind Funktionen mit einem ganzzahligen Argument, ausgedrückt durch Wittenberger Fraktur MT-Kleinbuchstaben ohne Tilde, z. B.: $\dot{x}(n)$. Entsprechend werden Verstärkungsfaktoren in diskreten Systemen durch Wittenberger Fraktur MT-Großbuchstaben ohne Tilde bezeichnet, wie z. B.: A(n). In der im Folgenden eingeführten Zustandsvariablendarstellung treten Signalvektoren auf; diese werden durch Fraktur-Kleinbuchstaben bezeichnet, und zwar im kontinuierlichen Fall mit Tilde, z. B.: $\tilde{x}(t)$ und in dem diskreten Fall ohne Tilde, z. B.: r(n). An die Stelle der Skalarenverstärkungsfaktoren treten in diesem Fall im Allgemeinen zeitabhängige Matrizen, welche durch Fraktur-Großbuchstaben bezeichnet sind. Eine kontinuierliche Koeffizientenmatrix besitzt eine Tilde, z. B.: $\tilde{\mathfrak{A}}(t)$, im diskreten Fall fehlt die Tilde, z. B. $\mathfrak{A}(n)$. Die Zustandsvariablen des allgemeinen, linearen, kontinuierlichen und zeitvariablen Systems sind in Fig. 7 gezeigt. Das (vektorielle) Eingangssignal $\tilde{x}(t)$ gelangt nach Multiplikationen mit der Matrix $\tilde{\mathfrak{C}}$ und eines Addierers 7 auf einen Integrator 8, dessen Ausgangssignal $\tilde{s}(t)$ der sogenannte Zustandsvektor ist. Dieses Signal wird nach Multiplikation mit $\tilde{\mathfrak{A}}$ über den genannten Addierer 7 auf den Integratoreingang zurückgekoppelt. Das Ausgangssignal $\tilde{y}(t)$ entsteht aus der Superposition des mit $\tilde{\mathfrak{D}}(t)$ gewichteten Eingangssignals und des mit $\tilde{\mathfrak{B}}(t)$ gewichteten Zustandsvektors in einem Addierer 9:

$$\tilde{s}(t) = \tilde{\mathfrak{C}}(t)\tilde{x}(t) + \frac{1}{T_N}\int_{-\infty}^{1}\tilde{\mathfrak{A}}(\tau)s(\tau)d\tau \qquad (14)$$

$$\tilde{\mathfrak{y}}(t) = \tilde{\mathfrak{D}}(t)\tilde{\mathfrak{r}}(t) + \tilde{\mathfrak{B}}(t)\tilde{\mathfrak{s}}(t) \tag{15}$$

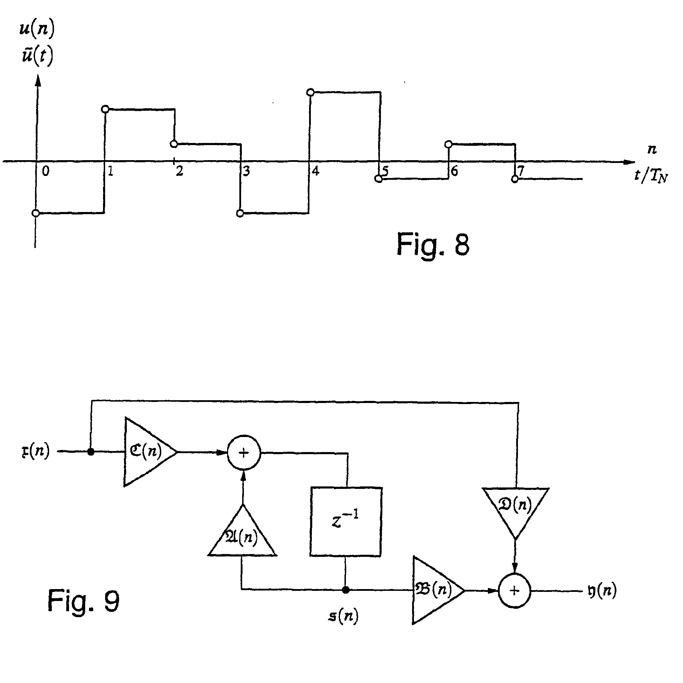

Es sei nun angenommen, dass die Zeitfunktion aller Komponenten des Eingangssignals $\tilde{\mathfrak{r}}(t)$ sowie der Matrizen $\tilde{\mathfrak{A}}$, $\tilde{\mathfrak{B}}$, $\tilde{\mathfrak{C}}$ und $\tilde{\mathfrak{D}}$ einen treppenförmigen Verlauf gemäß der Funktion $\tilde{\mathfrak{u}}(t)$ in Fig. 8 habe. Diese Funktion springt an den Stellen $t = nT_N$; sie ist zwischen den Sprungstellen konstant.

Als Abtastwerte $u(n) = \tilde{\mathfrak{u}}(nT_N)$ gelten die rechtsseitigen Grenzwerte der jeweiligen Sprungstellen, wie in Fig. 8 durch kleine Kreise angedeutet.

In dieser Betriebsart lässt sich das kontinuierliche System durch ein diskretes Ersatzmodell nach Fig. 9 beschreiben, wobei sich die Koeffizientenmatrizen dieses Systems folgendermaßen berechnen (wenn "1" die Einheitsmatrix ist):

$$\mathfrak{A}(n) = e^{\tilde{\mathfrak{A}}(nT_N)} \tag{16}$$

$$\mathfrak{B}(n) = \tilde{\mathfrak{B}}(nT_N) \tag{17}$$

$$\mathfrak{C}(n) = \tilde{\mathfrak{A}}^{-1}(nT_N) e^{\tilde{\mathfrak{A}}(nT_N)-1} \tilde{\mathfrak{C}}(nT_N) \tag{18}$$

$$\mathfrak{D}(n) = \tilde{\mathfrak{D}}(nT_N) \tag{19},$$

wobei die Exponentialfunktion einer quadratischen Matrix $\tilde{x}$ folgendermaßen definiert ist:

$$e^{\tilde{x}} = \sum_{i=0}^{\infty} \frac{\tilde{x}^i}{i!} \tag{20}$$

Bezüglich der Bildung der Abtastwerte an den Sprungstellen gilt das oben Gesagte. Für die diskreten Signale im Ersatzmodell gilt:

$$\mathfrak{r}(n) = \tilde{\mathfrak{r}}(nT_N) \tag{21}$$

$$\mathfrak{s}(n) = \tilde{\mathfrak{s}}(nT_N) \tag{22}$$

$$\mathfrak{y}(n) = \tilde{\mathfrak{y}}(nT_N) \tag{23}$$

Die Differentialgleichungen, durch die das Ersatzsystem charakterisiert wird lauten:

$$\mathfrak{s}(n+1) = \mathfrak{C}(n)\mathfrak{r}(n) + \mathfrak{A}(n)\mathfrak{s}(n) \tag{24}$$

$$\mathfrak{y}(n) = \mathfrak{D}(n)\mathfrak{r}(n) + \mathfrak{B}(n)\mathfrak{s}(n) \qquad (25)$$

Um den eingangs genannten Voraussetzungen zu genügen, ist das Austaster-Filter - wie in Fig. 6 gezeigt - um einen differenzierenden Eingang mit der Funktion

$$T_N \cdot \frac{d}{dt}$$

zu ergänzen. $T_N$ war im Zusammenhang mit der Modellierung des Gyroskoppfads eine beliebige Normierungskonstante. Diese Konstante wird nun auf den Wert der Stufenbreite des Eingangssignals und der zeitvariablen Konstante des kontinuierlichen Modells und damit der Taktzeit des diskreten Modells festgelegt. Physikalisch gesehen ist $T_N$ die Taktzeit mit der das Austaster-Filter 4 betrieben wird; sie ist ein ganzzahliger Bruchteil der Taktzeit T der Modulation am Phasenmodulator des MIOCs:

$$T_N = \frac{T}{k} \qquad (26)$$

Physikalisch sinnvolle Austaster-Filter haben Tiefpass-Charakter; hierfür gilt

$$\tilde{\mathfrak{C}} = 0 \qquad (27)$$

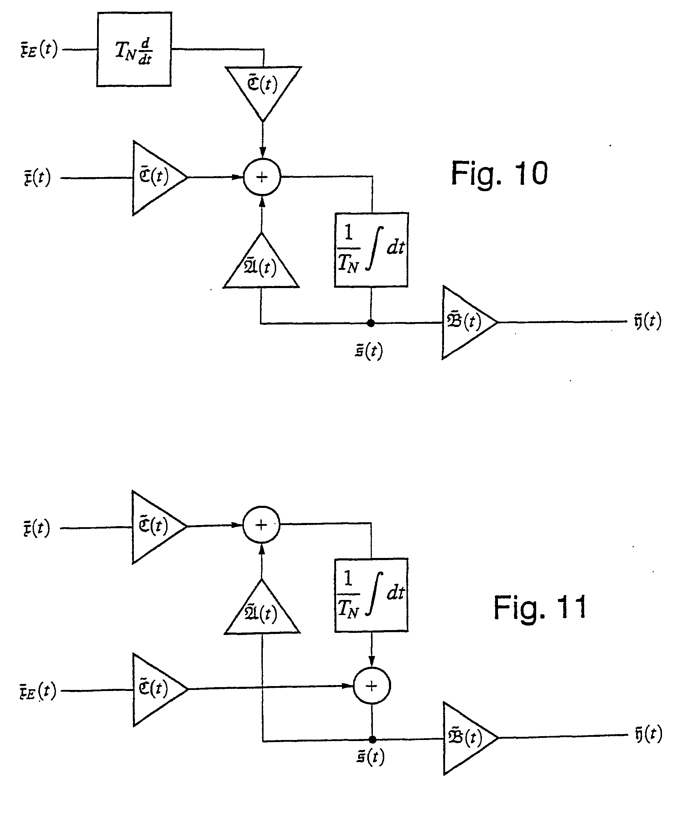

Ergänzt man Fig. 7 unter dieser Voraussetzung noch mit einem differenzierenden Eingang, so erhält man das Diagramm nach Fig. 10. Wie leicht zu erkennen ist, kompensieren sich die Funktionen des Differenzierglieds und des Integrators für die Zustandsvariablen, so dass die Einspeisung des zu differenzierenden Signals auf den Ausgang des Integrators verlegt werden kann, womit das Differenzierglied überflüssig wird; vergleiche Fig. 11.

Eine weitere Modifikation ergibt sich durch Verschieben des Einspeisepunkts über die Matrizen $\tilde{\mathfrak{A}}$ und $\tilde{\mathfrak{B}}$ mit

$$\tilde{\mathfrak{C}}_E(t) = \tilde{\mathfrak{A}}(t)\tilde{\mathfrak{C}}(t) \qquad (28)$$

$$\mathfrak{D}_E(t) = \tilde{\mathfrak{B}}(t)\tilde{\mathfrak{C}}(t) \qquad (29)$$

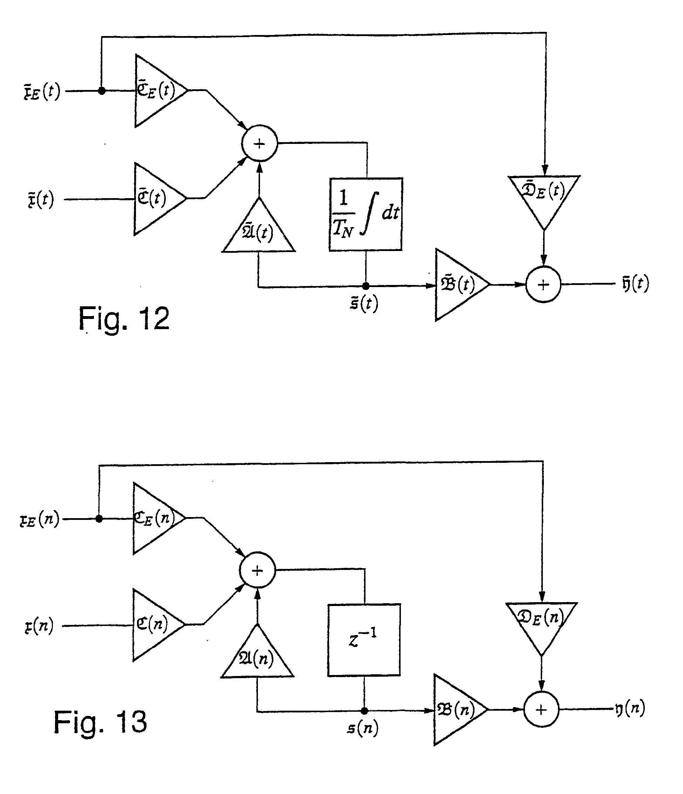

Diese zweite Modifikation ist im kontinuierlichen Modell mit differenzierendem Eingang gemäß Fig. 12 veranschaulicht.
Das Signalflussdiagramm hat nun eine Form, auf welche sich die oben angegebenen Regeln zur Umwandlung in eine diskrete Ersatzform anwenden lassen. Mit

$$\mathfrak{A}(n) = e^{\tilde{\mathfrak{A}}(nT_N)} \qquad (30)$$

$$\mathfrak{B}(n) = \tilde{\mathfrak{B}}(nT_N) \qquad (31)$$

$$\mathfrak{C}(n) = \tilde{\mathfrak{A}}^{-1}(nT_N)(e^{\tilde{\mathfrak{A}}(nT_N)} - 1)\tilde{\mathfrak{C}}(nT_N) \qquad (32)$$

$$\mathfrak{C}_E(n) = (e^{\tilde{\mathfrak{A}}(nT_N)} - 1)\tilde{\mathfrak{C}}(nT_N) \qquad (33)$$

$$\mathfrak{D}_E(n) = \tilde{\mathfrak{B}}(nT_N)\tilde{\mathfrak{C}}(nT_N) \qquad (34)$$

ergibt sich das in Fig. 13 gezeigte Blockdiagramm einer diskreten Modellnachbildung mit differenzierendem Eingang.

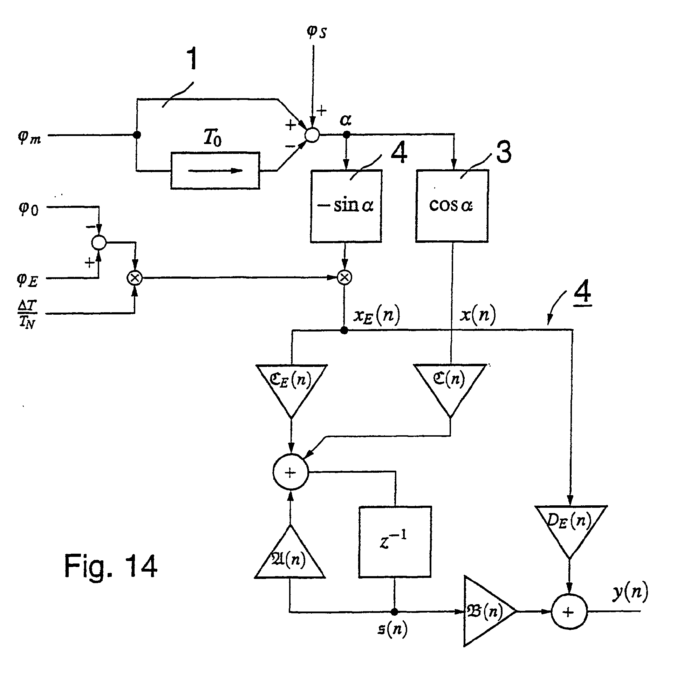

Fügt man die Modelle der Fig. 6 und 13 zusammen, so erhält man das komplette diskrete Modell des Kreiselpfades einschließlich Austaster-Filter gemäß Fig. 14. Hierbei ist zu beachten, dass Eingangs- und Ausgangssignale des Austaster-Filters skalar sind und daher mit x, $x_E$ und y bezeichnet sind. Die Koeffizientenmatrix $D_E$ geht daher in den skalaren Koeffizienten $D_E$ über. Es sei daher noch erwähnt, dass alle Koeffizientenmatrizen periodische Funktionen sind. Das Austaster-Filter wiederholt seine zeitabhängigen Parameter mit der Periode $T = kT_N$; die Periode der zeitabhängigen Matrizen ist daher k.

### 3. Beispiele

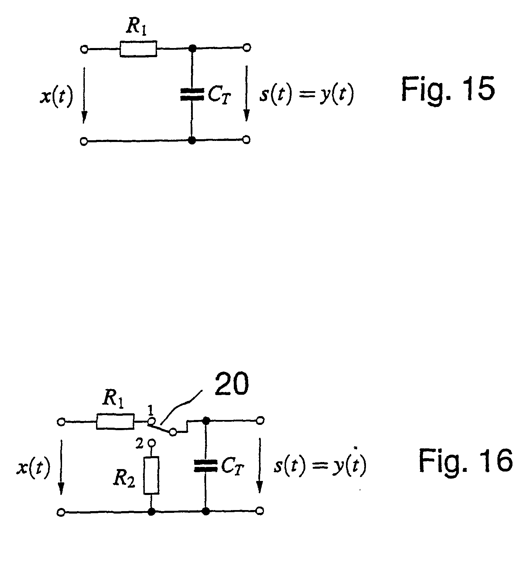

Zunächst werde als Austaster-Filter die Struktur nach Fig. 15 verwendet, die aufgrund ihrer Zeitunabhängigkeit eine reine Filterfunktion repräsentiert. Sie wird beschrieben durch folgende Differentialgleichung:

$$C_T \frac{ds(t)}{dt} = \frac{x(t) - s(t)}{R_1} \qquad (35)$$

aus deren Integration sich ergibt:

$$s(t) = \frac{1}{T_N} \int_{-\infty}^{1} \frac{T_N}{R_1 C_T} (x(\tau) - s(\tau))\, d\tau \qquad (36)$$

Hieraus wiederum lassen sich sofort die konstanten und wegen der Ordnung "1" des dargestellten Tiefpasses skalaren Koeffizienten des kontinuierlichen Zustandsvariablenmodells ablesen, wobei $T_1 = R_1 CT$ ist:

$$\tilde{A} = -\frac{T_N}{T_1} \qquad (37)$$

$$\tilde{B} = 1 \qquad (38)$$

$$\tilde{C} = \frac{T_N}{T_1} \qquad (39)$$

Mit den Gleichungen (30) bis (34) ergeben sich die diskreten Koeffizienten

$$A = e^{\frac{T_N}{T_1}} \qquad (40)$$

$$B = 1 \qquad\qquad (41)$$

$$C = 1 - e^{-\frac{T_N}{T_1}} \qquad\qquad (42)$$

$$CE = \frac{T_N}{T_1} \left(e^{-\frac{T_N}{T_1}} - 1\right) \qquad\qquad (43)$$

$$D_E = \frac{T_N}{T_1} \qquad\qquad (44)$$

Fig. 16 zeigt einen Tiefpass mit Entladefunktion. Dieser hat Dank eines eingebauten Schalters 20 zwei Zustände. Im Zustand 1 ist die Funktion identisch zum vorherigen Beispiel der Fig. 15. Im Zustand 2 wird der Kondensator $C_r$ vom Eingang getrennt und über $R_2$ entladen. Hieraus bestimmt man die folgende Differentialgleichung

$$C_T \frac{ds(t)}{dt} = \frac{-s(t)}{R_2} \qquad\qquad (45)$$

oder integriert:

$$s(t) = \frac{1}{T_N} \int_{-\infty}^{1} \frac{T_N}{R_2 C_T} \left(-s(\tau)\right) d\tau \qquad\qquad (46)$$

Es ergeben sich damit für beide Zustände getrennte Koeffizientensätze, wobei der erste mit demjenigen des vorigen Beispiels (Fig. 15) identisch ist. Der zweite Satz folgt aus Gleichung (46), so dass man schließlich mit $T_2 = R_2 C_T$ erhält:

$$A_1 = e^{-\frac{T_N}{T_1}} \qquad\qquad (47)$$

$$A_2 = e^{-\frac{T_N}{T_2}} \qquad\qquad (48)$$

$$B_1 = 1 \qquad\qquad (49)$$

$$B_2 = 1 \qquad\qquad (50)$$

$$C_1 = 1 - e^{-\frac{T_N}{T_1}} \qquad\qquad (51)$$

$$C_2 = 0 \qquad\qquad (52)$$

$$C_{E1} = \frac{T_N}{T_1} \left(e^{-\frac{T_N}{T_1}} - 1\right) \qquad\qquad (53)$$

$$C_{E2} = 0 \qquad\qquad (54)$$

$$D_{E1} = \frac{T_N}{T_1} \qquad\qquad (55)$$

$$D_{E2} = 0 \qquad\qquad (56)$$

Aus den gefundenen Koeffizientensätzen ist nun noch eine zeitdiskrete periodische Folge zu konstruieren. Dies wird anhand des Koeffizienten A(n) hier beispielhaft gezeigt:

Eine Periode T umfasst k Takte $T_N$ des Filters; im Beispiel sei k = 8. Am Anfang einer Periode sei der Tiepass in Entladestellung:

$$A(1) = A_2 \qquad\qquad (57)$$

Die restlichen 7 Takte sei der Tiefpass in Arbeitsstellung:

$$A(2...8) = A_1 \qquad\qquad (58)$$

Ansonsten wird die Folge periodisch fortgesetzt:

$$A(i) = A(i+8) \qquad\qquad (59)$$

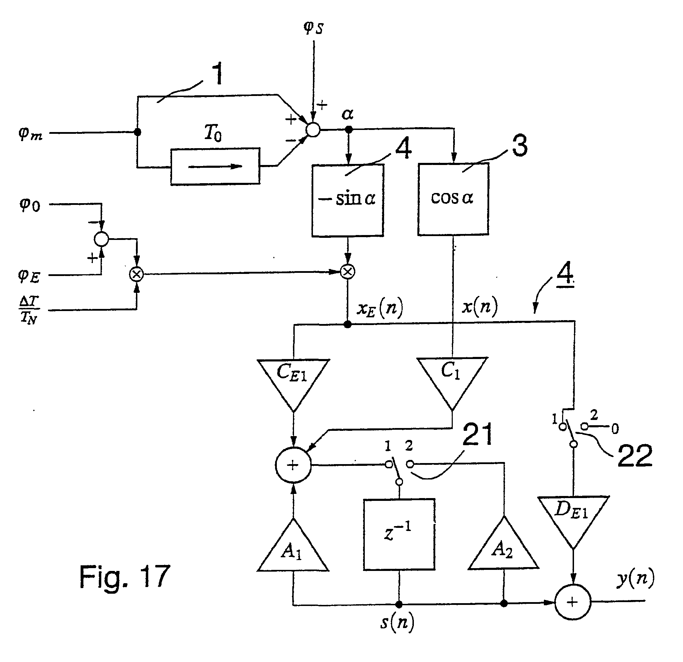

Entsprechendes gilt analog für die restlichen Koeffizienten. Die Koeffizientensätze werden vor Beginn der Simulation berechnet und entsprechend dem periodischen Ablaufmuster vom diskreten Zustandsmodell verwendet. Das hierdurch bewirkte periodische Umschalten der Koeffizienten lässt sich im konkreten Fall gemäß Fig. 17 durch Schalter 21, 22 darstellen, die periodisch zwischen den Zuständen "1" und "2" wechseln.

Gemäß der Erfindung (vgl. Fig. 1) lässt sich damit der aus dem Phasenmodulator innerhalb des MIOC 11, der Faseroptik, dem Detektor 10 und dem Austaster-Filter 4 bestehende Teil eines FOGs für den Fall einer Fehlabstimmung bei synchroner Störsignaleinstreuung durch ein zeitdiskretes systemtheoretisches Modell nachbilden. Die dem Detektor nachgeschaltete Filterfunktion kann beliebiger Ordnung sein und eine beliebige, im Raster des Simulationstaktes stückweise konstante Zeitabhängigkeit haben. Für die synchrone Einstreuung wird dabei ebenfalls und zulässig eine im selben Raster stückweise konstante Funktion vorausgesetzt, die in der Taktzeit der MIOC-Modulation periodisch ist. Für den Fall eines Tiefpasses mit Entladefunktion als Austaster-Filter wurden oben das Signalflussdiagramm und die Koeffizienten explizit dargestellt. Wie sich aus Fig. 17 ersehen lässt, nimmt in diesem Beispiel die Einstreuung folgenden Weg: Sie wird mit der Fehlabstimmung $\Delta T$ gewichtet, sodann mit $-\sin\alpha(t)$ moduliert und erzeugt dann neben einem normal gefilterten Anteil zusätzlich einen über den Koeffizienten $D_{E1}$ zugeführten Direktanteil am Ausgang des Austaster-Filters 4.

Aus der oben dargestellten Systemanalyse und Modelldarstellung lässt sich die Information über die Fehlabstimmung dazu nutzen, einen Regelkreis mit einem spannungssteuerbaren Oszillator VCO 12 (Fig. 1) aufzubauen. Dabei wird, wie oben dargestellt, ein im Abtasttakt periodisches der synchronen Störsignaleinstreuung entsprechendes Signal $\varphi_E$ in Form einer Zusatzmodulation zum Modulationssignal für den Phasenmodulator im MIOC 11 addiert. Gemäß Fig. 14 bzw. 17 erscheint dieses Signal nun gewichtet mit der normierten Fehlabstimmung $\Delta T/T_N$, gegebenenfalls moduliert mit dem jeweiligen Vorzeichen bei Random-Modulation ($-\sin\alpha$) und multipliziert mit einer von Filtern am Ausgang des Detektors 10 abhängigen Funktion $D_E$ am Ausgang $y(n)$. Falls $\varphi_E$ eine (ungewollte) synchrone Einstreuung ist, führt die dadurch hervorgerufene Störung von $y(n)$ nach deren Demodulation zu einem Nullpunktfehler. Der FOG 100 wird ansonsten normal betrieben. Außer dem FOG-Demodulator 13 und dem FOG-Hauptregler 14 ist eine Zusatz-Modulationseinrichtung 15 vorhanden. Das Rückstellsignal für den Phasenmodulator im MIOC 11 wird nach Demodulation des Detektorsignals durch den FOG-Hauptregler 14 gewonnen, der gegebenenfalls auch die Random-Modulation (vgl. EP 0 441 998 B1 u. EP 0 551 537 B1) erzeugt. Zusätzlich wird das demodulierte Detektorsignal $\varphi_m$ aber erfindungsgemäß auch mit der Zusatzmodulation $\varphi_E$ korreliert, d. h. mit dieser multipliziert und aufsummiert. Dieses aufsummierte, von der Fehlabstimmung abhängige Signal steuert über das Austaster-Filter 4 den VCO 12, der die Arbeitsfrequenz so lange nachstimmt, bis die Korrelation zu Null wird, was bei $\Delta T/T_N = 0$ der Fall ist. Über diesen weiteren Hilfsregelkreis wird also die Fehlabstimmung auf Null geregelt.

## Patentansprüche

1. Verfahren zur Vermeidung von Bias-Fehler aufgrund synchroner Einstreuung bei faseroptischen Gyroskopen (FOGs) mit geschlossener Regelschleife **dadurch gekennzeichnet, dass**

   - dem Modulationssignal am Phasenmodulator des Gyroskops eine zum Reziprokwert der Arbeitsfrequenz periodische Zusatzmodulation aufgeprägt wird,
   - im demodulierten Detektorsignal die vorhandenen Reste der Zusatzmodulation detektiert und
   - mit dem detektierten Signal der restlichen Zusatzmodulation ein Hilfsregelkreis angesteuert wird, der die Arbeitsfrequenz so nachregelt, dass die Zusatzmodulation innerhalb technisch vorgegebener Grenzen zu Null wird.

2. Verfahren nach Anspruch 1, **dadurch gekennzeichnet, dass** das demodulierte Detektorsignal mit dem Signal der Zusatzmodulation korreliert und mit dem korrelierten Signal der Hilfsregelkreis angesteuert wird, der die Arbeitsfrequenz so nachregelt, dass die Korrelation innerhalb der vorgegebenen Grenzen zu Null wird.

## Claims

1. A method for preventing bias errors as a result of synchronous interference in fiber-optic gyroscopes (FOGs) with a closed control loop, **characterized in that**

   - additional modulation, which is periodic with respect to the reciprocal of the operating frequency, is applied to the modulation signal at the phase modulator of the gyroscope,
   - the remainder of the additional modulation in the demodulated detector signal is detected, and
   - the detected signal from the remaining additional modulation is used to drive an auxiliary control loop, which readjusts the operating frequency such that the additional modulation tends to zero within technically predetermined limits.

2. The method as claimed in claim 1, **characterized in that** the demodulated detector signal is correlated with the signal from the additional modulation, and the correlated signal is used to drive the auxiliary control loop, which readjusts the operating frequency such that the correlation tends to zero within the predetermined limits.

**Revendications**

1. Procédé d'évitement de défauts de polarisation dus des interférences synchrones dans des gyroscopes à fibres optiques (FOG) comportant une boucle de régulation fermée **caractérisé en ce que**

   - au signal de sortie démodulé du détecteur FOG est appliquée une modulation supplémentaire périodique à une valeur réciproque de la fréquence de fonctionnement,
   - dans le signal de détecteur démodulé, le reste présent de la modulation supplémentaire est détecté, et
   - par le signal détecté du reste de modulation supplémentaire est commandé un circuit de réglage auxiliaire, qui règle de nouveau la fréquence de fonctionnement, de sorte que la modulation supplémentaire est amenée à zéro à l'intérieur de limites prédéterminées techniques.

2. Procédé selon la revendication 1, **caractérisé en ce que** le signal de détecteur démodulé est corrélé avec le signal de la modulation supplémentaire et est commandé avec le signal corrélé du circuit de réglage auxiliaire, qui règle de nouveau la fréquence de fonctionnement, de sorte que la corrélation est amenée à zéro à l'intérieur de limites prédéterminées.

<u>100</u>

Fig. 1

Fig. 2

Fig. 3

$\varphi_S$

1

$\varphi_m$

$T_0$

$+$
$-$

$\alpha$

3

$\cos \alpha$

$+$

4

Austaster-
Filter

5

$-\sin \alpha$

$+$

1'

$\varphi_E$

$\Delta T$

$+$
$-$

$\beta$

Fig. 4

$\varphi_S$

1

$\varphi_m$

$T_0$

$+$
$-$

$\alpha$

3

$\cos \alpha$

$+$

4

Austaster-
Filter

5

$-\sin \alpha$

$+$

$\varphi_0$

$-$
$+$

$\varphi_E$

$\frac{\Delta T}{T_N}$

$T_N\frac{d}{dt}$

$\beta$

6

Fig. 5

Fig. 6

Fig. 7

Fig. 8

Fig. 9

$$\bar{\mathfrak{x}}_E(t) \longrightarrow \boxed{T_N \frac{d}{dt}}$$

$$\bar{\mathfrak{C}}(t)$$

$$\bar{\mathfrak{x}}(t) \longrightarrow \bar{\mathfrak{C}}(t) \longrightarrow + \qquad \text{Fig. 10}$$

$$\tilde{\mathfrak{A}}(t) \qquad \boxed{\frac{1}{T_N} \int dt}$$

$$\tilde{\mathfrak{B}}(t) \longrightarrow \tilde{\mathfrak{h}}(t)$$

$$\tilde{\mathfrak{s}}(t)$$

$$\bar{\mathfrak{x}}(t) \longrightarrow \tilde{\mathfrak{C}}(t) \longrightarrow +$$

$$\tilde{\mathfrak{A}}(t) \qquad \boxed{\frac{1}{T_N} \int dt} \qquad \text{Fig. 11}$$

$$\bar{\mathfrak{x}}_E(t) \longrightarrow \tilde{\mathfrak{C}}(t) \longrightarrow +$$

$$\tilde{\mathfrak{B}}(t) \longrightarrow \tilde{\mathfrak{h}}(t)$$

$$\tilde{\mathfrak{s}}(t)$$

Fig. 12

Fig. 13

Fig. 14

Fig. 15

Fig. 16

EP 1 412 699 B1

Fig. 17

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4759629 A
- EP 0441998 B1
- EP 0551537 B1
- DE 19748909 C1